Europäisches Patentamt

European Patent Office

Office européen des brevets

(11) Publication number: **0 506 183 A1**

## EUROPEAN PATENT APPLICATION

(21) Application number: **92200788.5**

(22) Date of filing: **19.03.92**

(51) Int. Cl.5: **A01G 1/04**, B65G 65/48,
B65G 65/42

(30) Priority: **27.03.91 NL 9100542**

(43) Date of publication of application:
**30.09.92 Bulletin 92/40**

(84) Designated Contracting States:
**AT BE CH DE ES FR GB IT LI LU NL SE**

(71) Applicant: **Hofmans, Henricus, Christianus,
Antonius
Stationsstraat 102
NL-5963 AB Horst-Hegelsom(NL)**

(72) Inventor: **Hofmans, Henricus, Christianus,
Antonius
Stationsstraat 102
NL-5963 AB Horst-Hegelsom(NL)**

(74) Representative: **Timmermans, Anthonius
C.Th., Ir.
European Patent Attorneys Octrooibureau
Zuid P.O. Box 2287
NL-5600 CG Eindhoven(NL)**

(54) Container for delivering soil compost in a thin layer.

(57) A container (1) is provided with pick-up means
(5) with which the container (1) can be placed in a
horizontal position on a vehicle. The container (1) is
provided with drivable delivery means (7, 22-25) for
the provision of the contents of the container (1) in a
dosed and layered form at a given location, such
contents being, for example, soil, compost, etc. for
use by mushroom cultivators, for example. The de-
livery means can include a rotatable wheel (7) moun-
ted at the bottom (2) of the container (1), or one or
more movable chains (22, 23) in the same place,
between which chains carriers (24, 25) are mounted.

FIG. 1

The invention pertains to a container which is provided with pick-up means with which the container can be placed in a horizontal position on a vehicle, and which is provided with translation means upon which the container can be translated after having been brought into a vertical position, and which is provided with internally mounted delivery means for the purpose of delivering the contents of the vertically-positioned container in layers.

Such a container is described in Dutch patent application 8903040, which has not yet been laid open. The container described therein contains delivery means which consist of a somewhat canted, driven transport-chain, mounted in the undermost part of the container, whereby the thickness of the soil-layer to be delivered by the container is determined jointly by an adjustable dosage-disc, inclined at an angle of approximately 30 degrees to the vertical, and by a vertically adjustable transporter.

The present, and less complicated, container according to the invention is distinguished by the presence of a groove-shaped channel on that side of the container which is undermost when the container is viewed in its vertical position, and by the presence above this groove-shaped channel of delivery means which are movable in a transverse plane of the container.

A preferential embodiment of the container according to the invention is characterised by coincidence of the rotation-axis of the delivery means, which are rotatable in a transverse plane of the container, and of the longitudinal axis of the container itself, which has a circular cross-section, and also by the fact that the delivery means include a rotatable wheel which is furnished with bulkheads spaced at regular intervals according to a grid-pattern and which is coupled to driving means whose speed can be regulated.

The advantage of this preferential embodiment of the container according to the invention is that, by regulating the speed of the driving means, the amount of material delivered from the container in layers can be adjusted as desired. In this case, coupling of the driving means and the wheel can be achieved via interlocking teeth, cogs or, for example, a chain-drive.

A further preferential embodiment of the container according to the invention is characterised in that a cover-plate is mounted in the container above the channel, at a distance from it, and almost parallel to its longitudinal axis.

The advantage hierof is that the cover-plate prevents unwanted and undosed flow of the material contents of the container between the bulkheads and along the channel.

A following embodiment of the container according to the invention is characterised in that the container contains a base plate on its underside, that the groove-shaped channel is made in the base plate and that the base plate is mounted so as to be rotatable about an axis perpendicular to the transverse plane of the container.

Such a rotatable base plate provided with a groove-shaped opening, under which a suitably-positioned conveyor belt is usually placed, makes it possible, via rotation of the base plate, to position the opening relative to the conveyor belt in such a way that the width of the layer deposited thereon can be adjusted according to desire. In practice, the region across which the width can vary ranges from 20 cm to 220 cm.

An alternative preferential embodiment of the container according to the invention is characterised in that the delivery means are movable in the transverse plane of the container, which now has a rectangular cross-section, and in that they include two plates which are mounted at a distance from each other above the channel and are displaced relative to each other, between which plates the channel is left through which run chains which are mounted on chain-wheels on opposite sides, between which chains are mounted carriers which transport the material contents of the container in the direction of the channel.

A further embodiment of the container according to the invention, in which only a relatively small quantity of power (electrical or hydraulic, for example) is actually required to move the delivery means via the driving means, is characterised in that the delivery means are composed of at least two systems, placed at a distance from each other within the container, each of which includes pairs of guiding means around which a belt or chain is laid and whereby carriers are mounted between respective chain-pairs, which carriers transport the material contents of the container in the direction of the channel.

The reduction of the required quantity of power is attributed to the smaller fraction of that material present in a transverse section of the container which is moved in the direction of the channel by the separate systems, which systems possess a limited working-area.

This required power can be reduced even further by placing the systems near the channel in a formation whereby they lean somewhat towards each other, and preferably in a V-formation.

By applying adjustment means for adjustment of the position of at least one of the systems, the width of the opening between the systems, which is located near the channel, can be adjusted as desired to suit, for example, the type and structure of the contents of the container. The invention, along with some extra associated advantages, shall be further elucidated with the aid of the accompanying drawing. Similar elements in the different figures are labelled with the same reference numbers. The figures depict the following:

Figure 1 shows a schematic and partially exploded view of a first preferential embodiment of the container according to the invention;

figure 2 depicts a second preferential embodiment of the container according to the invention.

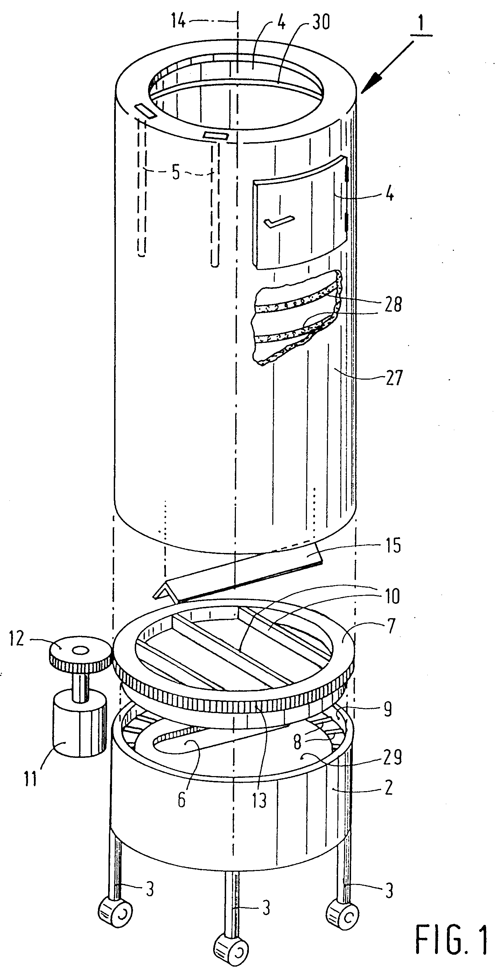

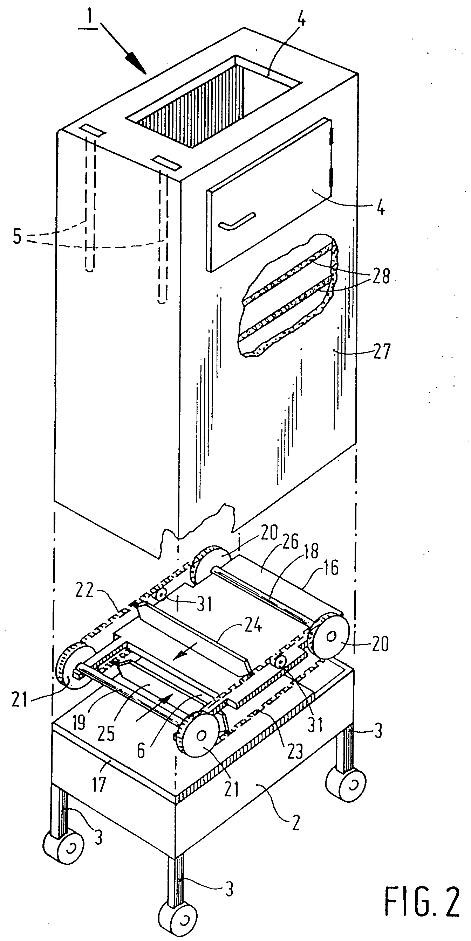

Depicted in figures 1 and 2, respectively, are containers 1 which possess respective circular and rectangular cross-sections. The container 1 stands on an under-carriage 2 in a vertical position. The under-carriage 2 is provided with translation means 3. The translation means 3 can be operated in a familiar manner (electro-hydrolically or via external mechanical drive, for example) so as to translate the container 1. The containers can be provided with, for example, soil, fertiliser (such as chicken manure, mushroom fertiliser, etc.), compost or a mixture of these substances. The containers are also suitable for bulk goods or loose aggregate products, materials or substances such as turf, etc. The container 1 is filled via sealable filling ports 4, which are located at the top or in one of the side walls of the container 1. With the aid of known pick-up means 5, the container 1 can be pulled up onto a vehicle (which is not depicted) and transported thus in a horizontal position. At the bottom of the container 1 is located a base plate 29 in which a groove-shaped channel 6 is made, through which channel the contents of the container can be delivered. It is preferable to have a rotatable base plate, so that the width of the delivered layer of container-material to be deposited on a conveyor belt (not depicted) can be adjusted according to desire.

In the embodiment in figure 1, delivery means which are embodied as a wheel 7 are located at the bottom of the container. The wheel 7 is mounted on bearing chases 8 on an internal shoulder 9 of the container 1 so as to be rotatable. The wheel 7, which is provided with bulkheads 10, can be driven in a rotary manner by an axle which is driven by a motor 11, which axle is provided with a transmission-mechanism, if so desired. The axle could, for example, be a branch-axle of a tractor. The motor 11 is, for example, an electromotor or a hydraulic motor. The motor 11 is coupled via means 12 to, for example, cog-teeth 13 along the outside of the wheel 7. The wheel 7 can, of course, also be driven by other undepicted means, such as internal cog-teeth on the wheel, or a belt, cable or chain which couples the wheel 7 to the driving means 12. When the wheel 7 is rotated, the bulkheads 10 scrape off part of the container-contents, which, in loosened and friable form, can then pace through the channel 6. The wheel 7 and the bulkheads 10 serve as scraping means, as loosening and milling means, as dosage-unit and as carriers of container-material, and, above all, see to it that the channel 6 does not get blocked and that a continuous flow of container-material issues therefrom. The speed of the motor 11 can be varied in a familiar manner, whereby the quantity of material delivered per unit time can be influenced. Above the wheel, which can be rotated about a rotary axis 14, is located, within the container, a cover-plate 15 which runs almost parallel to the groove-shaped channel 6. The cover-plate 15 prevents an excessive quantity of container-material from concentrating in the channel 6, especially in the middle of the channel, so that an almost uniformly distributed layer of container-material paces through the channel 6.

In the preferential embodiment of the container 1 which is depicted in figure 2, a pair of parallel plates 16 and 17 is located at the bottom of the container. These plates are displaced relative to one another and are mounted at a distance from each other so that a channel 6 arises through which the container-material is made available with the aid of delivery means. The delivery means are embodied as pairs of chain-wheels 20 and 21 which are mounted on axles 18 and 19, together with carriers mounted between chains 22 and 23 which pass around the chain-wheels 20 and 21, carriers 24 and 25 being rendered in the figure. With the aid of driving means which are not depicted, the chain-wheels 20 and 21 are driven in such a way that the carrier 24 moves forward and the carrier 25 moves backward, as indicated by the arrows. In this way, the carrier 24 slides along the upper surface 26 of the plate 16 and the container-material is led in the direction of the channel 6, after which carriers of type 25 push the container-material through the channel 6. The movable carriers 24 and 25 not only ensure that the container-material is transported to the channel 6, but also that it is scraped loose and made friable, so that it can be delivered in dosed layers at the channel 6. Dosage of the delivered quantity of layered container-material can occur via the previously cited method of influencing the motional speeds of carriers 24 and 25 via influence of the speed of the driving means in the familiar manner.

It is preferable to employ chain-tensioning means within the container, in the form of tensioning-wheels 31, for example, or other known chain-tensioning devices, which, after a suitable adjustment, maintain the correct tension in the chains 22 and 23, even after the chain-stretch which accompanies lapse of time.

A generally known transport-belt can be positioned beneath the channel 6, which belt is not depicted in the relevent figures for reasons of clarity. If so desired, two counter-rotating rollers are mounted below channel 6, which rollers serve, if necessary, to make the container-contents (delivered in layers) loose and friable. The transport-belt is, in that case, located beneath the rollers. The transport-belts can be displaced, swung or tilted in a desired direction so as to allow height-differences to be bridged in the familiar manner with the aid of a drag-net, thereby allowing the material used on a mushroom-farm, for example, to be brought to its various stations. These transport-belts shall also be furnished with common arrangement-bulkheads so as to allow the width of the layered container-material to be varied, if so desired. Control of the width of the delivered layer of transport-material preferably occurs via rotation of the base plate 29, but can also be achieved using slides which can be mounted under the channel.

The container 1, together with its contents (which can weigh up to 25 tons), shall be movable in one direction with the aid of transport means (not generally depicted) which allow displacement of the displacement means 3. If so desired, two or more containers can be placed beside or behind each other, and can be coupled. In such a situation, one container might contain soil and the other container might contain fertiliser, for example, both of which substances can subsequently be made available simultaneously to, for example, mushroom cultivators who, using common drag-nets, for example, can deposit the substances for the purpose of cultivating mushrooms.

So as to prevent freezing of the contents during either transport or storage, the walls 27 of the container 1 can be furnished with heat-providing means 28. The means 28 are only partially and schematically depicted. The means 28 can be embodied as, for example, a ribbon of resistance-wire which is coupled to a source of electrical energy, but can also be embodied as, for example, a double wall, or as the depicted pipes, fitted in the wall 27, through which flows a liquid to be heated elsewhere. The heat can be derived from, for example, a heating system, or from the vehicle's cooling system. In this way, freezing of the contents of the container is prevented, so that the desired layered quantity of container-material is provided under all circumstances. Of course, the containers can also be covered over with a suitable tarpaulin under which a heat-source can be positioned. In warm weather, a cooling-aggregate can suitably lower the temperature of the container's contents.

It is preferable to mount a rinsing pipe 30, furnished with, for example, a rotating spray-head, within the container 1, for the purpose of rinsing down and disinfecting the walls of the container 1, for example. By laying a perforated spray-pipe beside the channel 6, one can administer water, for example, to the delivered contents of the container, thus moistening them. If so desired, such moistening can be dosed by including a water-meter in the spray-pipe's feeder-main.

For the purpose of driving the delivery means 7 and the chains 22 and 23, these components can be coupled to the driving-axle of an agricultural tractor.

If so desired, a shredder/miller can be mounted behind the opening 6 so as to give the delivered contents of the container the fine structure required for particular applications.

So as to allow delivery on various sides, the conveyor belt shall be placed on a slew turntable. Other geometrical forms of the container silo, such as a hexagonal form, are, of course, also possible.

In a further preferential embodiment, which is not depicted, the system comprising the elements 16, 18-25 is doubled and placed in the container 1 in a V-form which tapers in the direction of the channel 6. The lowermost parts of the separate systems are then located at a certain distance from one another, so that only part of a transverse layer of container-material need be brought into direct motion by the different carriers, resulting in less power-consumption than in the case of the embodiment elucidated earlier.

It is preferable to have an arrangement whereby the distance between the adjustable systems can be regulated. A distance of 40 cm appeared in practice to give positive results regarding the quantity of material which can be delivered per unit time.

## Claims

1. Container provided with pick-up means with which the container can be placed in a horizontal position on a vehicle, also provided with translation means on which the container can be translated after it has been brought into a vertical position, also provided with delivery means mounted within the container itself for delivery of the contents of the vertically-positioned container in a layered form, which container is characterised in that a groove-shaped channel is made in that side of the container which is undermost when the container is viewed in its vertical position, and that movable delivery means are mounted in a transverse plane of the container above the said groove-shaped channel.

2. Container according to claim 1, characterised in that the delivery means in the transverse plane can be rotated about a rotary axis which runs parallel to the longitudinal axis of the container.

3. Container according to claim 2, characterised in that the rotary axis coincides with the longitudinal axis of the container, which container possesses a circular cross-section, and that the delivery means include a rotatable wheel which is furnished with bulkheads spaced at regular intervals according to a grid-pattern, the said wheel being coupled to driving means whose speed can be regulated.

4. Container according to one of the claims 1-3, characterised in that a cover-plate is mounted in the container above the channel, at a distance from it, and almost parallel to its longitudinal axis.

5. Container according to one of the claims 1-4, characterised in that the container contains a base plate on its underside, that the groove-shaped channel is made in the base plate, and that the base plate is mounted so as to be rotatable about an axis perpendicular to the transverse plane of the container.

6. Container according to claim 1, characterised in that the delivery means are movable in the transverse plane of the container, which container possesses a rectangular cross-section, and in that they include two plates which are mounted at a distance from one another above the channel and which are displaced relative to each other, between which plates the channel is left through which run chains which are mounted on chain-wheels on opposite sides, between which chains are mounted carriers which transport the material contents of the container in the direction of the channel.

7. Container according to claim 6, characterised in that the chain and the chain-wheels are positioned in such a manner, and the chain-wheels are coupled to driving means of controllable speed so as to be brought into motion in such a direction, that the container-material which is situated on the upper surface of the plate located at the greatest distance from the channel is transported in the direction of the channel.

8. Container according to claim 1, characterised in that the delivery means are composed of at least two systems, placed at a distance from each other within the container, each of which includes pairs of guiding-means around which a belt or chain is laid and whereby carriers are mounted between respective chain-pairs, which carriers transport the material contents of the container in the direction of the channel.

9. Container according to claim 8, characterised in that the systems move the carriers in planes which are somewhat inclined with respect to each other.

10. Container according to claim 8 or 9, characterised in that the systems are arranged in a V-formation.

11. Container according to claim 10, characterised in that at least one of the systems is mounted in the container via adjustment means, thus allowing the width of an opening between the formation to be influenced.

12. Container according to one of the claims 1-11, characterised in that the walls of the container are provided with means which furnish the contents of the container with heat.

13. Container according to claim 12, characterised in that the heat-furnishing means include means which are directly or indirectly coupled to either the exhaust or the cooling system of the engine of the vehicle.

14. Container according to one of the claims 1-13, characterised in that a perforated rinsing-pipe is mounted in the container, via which pipe a desired liquid can be brought into the container.

FIG.1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | NL-A-6 800 117 (SUTEAU)<br>* page 2, line 35 - page 4, line 30; figures 1-4 *<br>--- | 1,2 | A01G1/04<br>B65G65/48<br>B65G65/42 |
| Y | CH-A-659 052 (SOHM)<br>* the whole document *<br>--- | 1,2 | |
| A | EP-A-0 225 283 (HYDRO MECANIQUE RESEARCH)<br>* column 2, line 50 - column 3, line 6; figures 5-7 *<br>--- | 1 | |
| A | DE-A-3 811 656 (RAUMA-REPOLA OY)<br>* the whole document *<br>--- | 1-3 | |
| A | CH-A-441 122 (MIAG MÜHLENBAU UND INDUSTRIE)<br>* column 3, line 5 - line 44; figures 1,2 *<br>--- | 1,6 | |
| A | DE-A-3 411 358 (RICHTER)<br>* page 22, paragraph 2 - page 23, paragraph 1; claim 1; figures 1,4A,4B *<br>--- | 12,13 | |
| A | JP-A-57 164 825 (SHINMEIWA KOGYO)<br>* abstract *<br>--- | 1 | TECHNICAL FIELDS SEARCHED (Int. Cl.5 )<br><br>A01G<br>B65G |
| A | FR-A-689 695 (BAMAG-MEGUIN AG)<br>* the whole document *<br>--- | 8-10 | B65D<br>B60P |
| A | EP-A-0 155 342 (KLÖCKNER-HUMBOLDT-DEUTZ AG)<br>* page 7, line 13 - page 8, line 34; figures 1-5 *<br>----- | 8,11 | |

The present search report has been drawn up for all claims

| Place of search | Date of completion of the search | Examiner |
|---|---|---|
| THE HAGUE | 25 JUNE 1992 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)